# EUROPEAN PATENT APPLICATION

(11) **EP 0 892 084 A1**
(43) Date of publication of application: **20.01.1999**
(21) Application number: 98112550.3
(22) Date of filing: 07.07.1998
(51) Int. Cl.: C23F 1/00, E03C 1/04

(54) **Method for preventing contamination by lead from metallic piping devices**

(30) Priority: 14.07.1997 JP 202648/97
(71) Applicant: KITZ CORPORATION, Chiba-shi, Chiba-ken (JP)
(72) Inventor: Sugita, Shinji, c/o Kitz Corporation, Kitakoma-gun, Yamanashi-ken (JP); Fujimoto, Osamu, c/o Kitz Corporation, Kitakoma-gun, Yamanashi-ken (JP); Kurose, Kazuhito c/o Kitz Corporation, Kitakoma-gun, Yamanashi-ken (JP); Sugaya, Norikazu, c/o Kitz Corporation, Kitakoma-gun, Yamanashi-ken (JP)
(74) Representative: Norén, Per Bo Arne

(57) **Abstract**

A method for preventing contamination by lead from a piping device (3) made of a lead-containing copper alloy includes the step (13) of chemically conditioning with an acid-containing detergent (2) at least part of the piping device coming into contact with a liquid, thereby inducing corrosion of lead dissolved out onto a surface layer of the liquid-contacting part of the piping device to delead the surface layer of the liquid-contacting part.

## Description

This invention relates to a method for preventing contamination by lead from piping devices such as valves, fittings and strainers made of metal which contains lead. More particularly, this invention relates to a method for preventing pollution of drinking water with lead from piping devices made of copper alloys such as bronze and brass containing lead by conditioning the piping devices with an acid wash. The conditioning of the piping devices with an acid wash retards dissolution of lead and fulfills the standard tolerance of lead contamination in drinking water coming into contact with the piping device.

Generally, the piping for tap water and the piping for supply of cold or hot water are furnished with valves, pipe joints, strainers or other piping devices. Many of these piping devices are made of copper alloys such as bronze and brass which excel in ability to be cast, machine workability, and economy.

Particularly, for the valves and joints which are made of bronze or brass, alloys having lead (Pb) incorporated therein in prescribed amounts are used for the purpose of enhancing ability to be cast and machine workability in the case of bronze or such properties as cuttability and hot forgeability in the case of brass.

When the fluid such as tap water is supplied through a valve which is made of such lead-containing bronze or brass, however, it is conceivable that the lead moiety of the lead-containing metal dissolved out onto the surface layer of the part of the valve exposed to the tap water will be dissolved into the tap water.

For the tap water used for drinking, therefore, the standard tolerance has been heretofore fixed with respect to the lead content to be measured by a specific method of analysis and evaluation. For the tap water to be accepted for drinking, it must meet this standard.

Since lead is a harmful substance for the human body, the amount of lead suffered to be dissolved into the tap water must be decreased to the fullest possible extent. Recently, the provisions of a standard imposed on the material to be used for the valve or other piping devices with respect to the amount of lead dissolved therefrom into the drinking water has been gradually gaining in exactitude.

In the circumstances, the desirability of developing such a material for the valve or other piping device as satisfies the conditions specified by the standard has been finding enthusiastic recognition. No method has been proposed to date, which is capable of preventing the material from dissolving lead to an extent of allowing effective solution of the problems heretofore incurred by the piping devices as described above.

The technique of using bismuth (Bi) or tellurium (Te), a substance which is held to manifest no toxicity, as an alternative to the lead in an amount small and yet enough for exalting the properties mentioned above to the same level as is attained by lead-containing copper alloys has been known to the art. It is, however, impracticable because the new alternative substance is a rare metal and, as a consequence, production of the material is costly.

The present invention has been perfected as the result of a diligent study continued in the light of the true state of prior art mentioned above. It has for an object thereof the provision of a technique for enabling a piping device made of a lead-containing metal and prepared for use to attain at a low cost a marked decrease in the amount of lead suffered to be dissolved therefrom as compared with the conventional standard.

This invention provides a method for preventing contamination by lead from a piping device made of a lead-containing copper alloy, comprising the step of chemically conditioning with an acid-containing detergent at least part of the piping device coming into contact with a liquid, thereby inducing corrosion of lead dissolved out onto a surface layer of the liquid-contacting part of the piping device to delead the surface layer of the liquid-contacting part.

The chemical conditioning can be effected, for example, by immersing the piping device in an acid-containing detergent. The corrosion of the lead can be accelerated by subjecting the piping device to ultrasonic washing while immersing the piping device in the detergent.

As the acid mentioned above, nitric acid and acetic acid which corrode lead are advantageously used either singly or in the form of a mixture thereof.

Preferably, the detergent which is used for the chemical conditioning comprises nitric acid and an inhibitor, and this inhibitor is hydrochloric acid or benzotriazole (BTA).

The metal which has been deleaded is brass and the brass is a copper alloy which has been dezincified. The duration of the acid washing is to be set in accordance with the capacity for production of piping devices and the degree with which the surface lead is to be removed.

The above object and other objects, features and advantages of this invention will become more apparent from the description to be made herein below with reference to the accompanying drawings, in which:-
Fig. 1 is an explanatory diagram illustrating a process for corrosion of lead in a batchwise manner according to the present invention;
Fig. 2 is an explanatory diagram illustrating application of a batchwise acid-washing step to valves according to the present invention;
Fig. 3 is an explanatory diagram illustrating another embodiment of batchwise acid-washing step according to the present invention;
Fig. 4 is a schematic diagram of a continuous acid-washing step according to the present invention;
Fig. 5 is an explanatory diagram illustrating another embodiment of continuous acid-washing step;
Fig. 6 is a graph showing the amount of lead obtained when material BC6 (JIS H 5111) has been subjected to acid washing under different conditions;
Fig. 7 is a graph showing the amount of lead obtained when material C3771 (JIS H 3250) has been subjected to acid washing under different conditions;
Fig. 8 is a graph showing the relation between the surface lead content and the washing time when the material BC6 is conditioned with acid-containing detergents each consisting of nitric acid and an inhibitor;
Fig. 9 is a graph showing the relation between the surface lead content and the washing time when the material C3771 is conditioned with acid-containing detergents each consisting of nitric acid and an inhibitor;
Fig. 10 is a photomicrograph (x 1000) of a metallic sheet prior to conditioning;
Fig. 11 is a photomicrograph (x 1000) of the metallic sheet of Fig. 10 after conditioning;
Fig. 12 is a photograph illustrating the lead distribution on the surface of the metallic sheet prior to conditioning, obtained by an electron probe microanalyzer (EPMA); and
Fig. 13 is a similar photograph illustrating the surface of the metallic sheet after conditioning.

The method of the present invention for the prevention of lead dissolution in a valve made of lead-containing brass or bronze will be described with reference to the drawings.

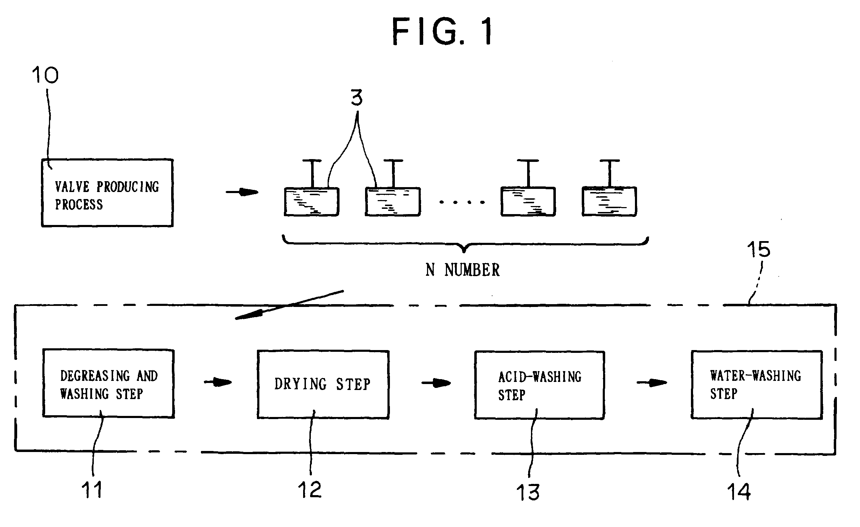

Fig. 1 is a diagram illustrating the component steps of a lead corroding process 15 performed on valves 3. In a valve producing process 10, a fixed number (N) of valves 3 are produced per unit time. The N number of valves 3 are conveyed as a unit to a degreasing and washing step 11 at which the one unit of valves 3 is immersed in a vessel (not shown) filled with a liquid organic solvent and subjected therein to ultrasonic washing. At this step, the greasy substance adhering to the surface of the valves 3 is removed for the sake of exalting the effect of the acid washing which will be specifically described afterward.

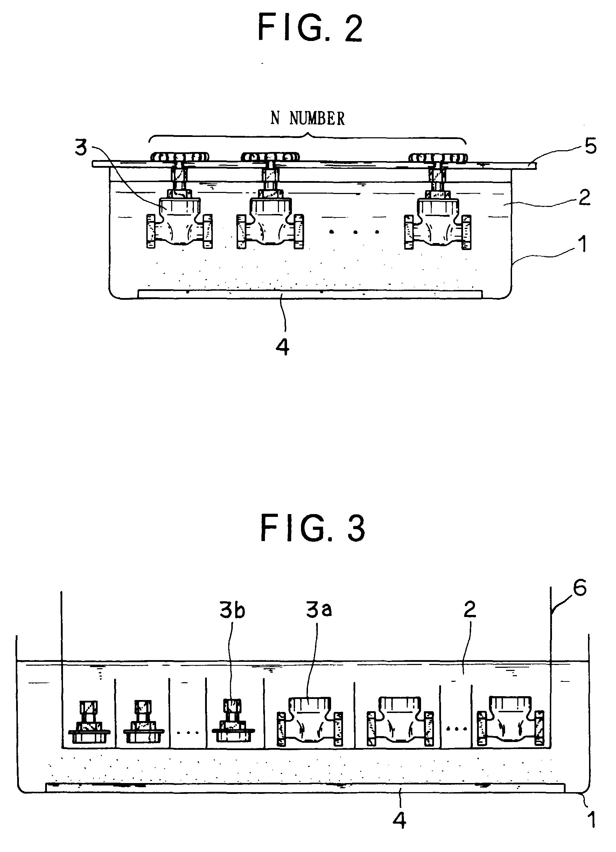

At a drying step 12, the valves 3 which have been degreased at the degreasing and washing step 11 are subjected to spontaneous drying or forced drying to effect thorough expulsion of the organic solvent by volatilization. The thorough expulsion of the organic solvent is intended to prevent the organic solvent from stealing its way into a subsequent acid-washing step 13, forming a hydrophobic residual oil film on the surface of the valves 3, partially interfering with dissolution of lead, and altering the acid concentration of a detergent 2 (Fig. 2) possibly to the extent of disrupting proper acid washing. Incidentally, this drying step 12 may be omitted when the organic solvent is capable of being immediately volatilized after completion of the degreasing and washing step 11.

The subsequent acid-washing step 13 is intended to subject the one unit of valves 3 to acid washing and consequently effect removal of lead from the surface of the valves 3. This step will be specifically described afterward.

After the removal of lead at the acid-washing step 13, the acid adhering to the one unit of valves 3 is rinsed at a water-washing step 14. The effect of this water-washing step 14 is similarly manifested by a neutralizing step which effects the washing by using a chemical agent capable of neutralizing the acid in the place of water.

At the time that the water-washing step 14 is completed on the one unit of valves 3, the valve producing process 10 begins to manufacture the next unit of valves 3. Thereafter, the component steps 11 to 14 described above are repeated.

The component steps of the lead corroding process 15 which is intended to delead the surface of the valves 3 batchwise perform relevant treatments simultaneously on the unit of valves 3. Particularly, since a vessel 1 (Fig. 2) furnished for the acid-washing step 13 has an inner volume large enough to allow simultaneous immersion of the N number of valves 3 all at once, it is made possible to decrease the dispersion of the concentration of the detergent 2 and uniformize the quality of the valves 3 obtained after the deleading treatment.

The batch treatments performed at the lead corroding process 15 are adjusted in accordance with the capacity of production of the valve producing process 10 and the degree with which the removal of surface lead is effected. The subjects of the adjustment are the number N of valves 3 in one unit and the duration of washing at the acid-washing step 13.

Now, the acid-washing step 13 will be described in detail below with reference to Figs. 2 - 5.

Fig. 2 is a schematic diagram illustrating a batch acid-washing treatment. With reference to the diagram, the vessel 1 is filled with the detergent 2 containing an acid (hereinafter referred to simply as "detergent") and one unit of valves 3 made of lead-containing bronze or brass is immersed in the detergent 2 by having the handle parts of the valves 3 hooked on a pair of rod-like valve retaining members 5 and the opposite terminal parts of the valve retaining members 5 fastened to the opposite walls of the vessel 1. In the ensuant state of the vessel 1, the height of the liquid surface of the detergent 2 is adjusted so that the valves 3 are substantially wholly immersed in the detergent 2 except for the handles and part of the stems thereof.

In this case, the valves 3 held in the vessel 1 filled with the detergent 2 are subjected to the action of an ultrasonic washing device 4 or to the action of bubbling (not shown) to accelerate corrosion of the lead.

When the time which is set in advance for the acid washing terminates, the one unit of valves 3 are extracted from the detergent 2 by raising the valve retaining members 5 and then conveyed to the subsequent step.

Since this embodiment allows valves 3 each as a complete product to be given necessary acid washing, it not only copes effectively with the existing valves but also allows alteration of valves in conformity with a newly established standard tolerance of lead dissolution to be attained inexpensively. Further, since this embodiment simultaneously performs the acid-washing treatment on one unit of valves 3 all at once, it brings about the advantage that the valves to be produced incur no dispersion of quality.

Incidentally, in the present embodiment, since such fittings as pieces of packing and gaskets which are not made of a metallic material are also immersed in the detergent 2, it is probable that these fittings will be deteriorated, depending on the duration of acid-washing treatment and the acid concentration in the detergent 2. This deterioration may be precluded by having these fittings made of such a chemical-resistant material as, for example, fluorine rubber.

The detergent 2 which has been used is furnished with due maintenance as follows.

A prescribed amount of the used detergent 2 is withdrawn from the vessel 1, heat-treated until it is concentrated to an extent of inducing precipitation of such lead compounds as lead nitrate [Pb(NO₃)₂], and passed through a filter (not shown) to effect disposal of solid lead nitrate as an industrial waste. The detergent 2 which has been filtered is adjusted to a prescribed concentration and a prescribed volume by the addition of tap water or purified water together with nitric acid. It is then returned as a new supply of detergent 2 to the vessel 1 and readied for the next round of acid-washing treatment.

The maintenance of the prescribed amount of the detergent 2 is performed as described above after each round of the acid-washing treatment or at regular intervals by way of quality control of the detergent 2. This method allows the amount of industrial waste to be markedly decreased besides lowering the cost of production because it enables the detergent 2 to be recycled.

Fig. 3 illustrates another embodiment of this invention in the batch acid-washing treatment. In this diagram, like parts found in Fig. 2 are denoted by like reference numerals.

In this embodiment, liquid-contacting components of the valves 3 manufactured in the valve producing process 10, such as bodies 3a and bonnets 3b, are placed in a partitioned basket 6 and immersed in the detergent 2 and subjected therein to acid washing. After the acid washing has continued for a prescribed duration, the one unit of liquid-contacting components are extracted from the detergent 2 by raising the basket 6. After the series of treatments of the lead corroding process 15 is completed, the valves 3 are finally assembled.

This embodiment perfectly obviates the necessity of taking into consideration the deterioration of the pieces of packing and gaskets formed of a standard rubber material, such as nitrile-butadiene rubber (NBR) or ethylene-propylene terpolymer (EPDM), and built in the valves 3 in consequence of the acid washing and brings about the advantage of facilitating quality control.

Now, an embodiment of this invention in the continuous acid-washing treatment will be described below.

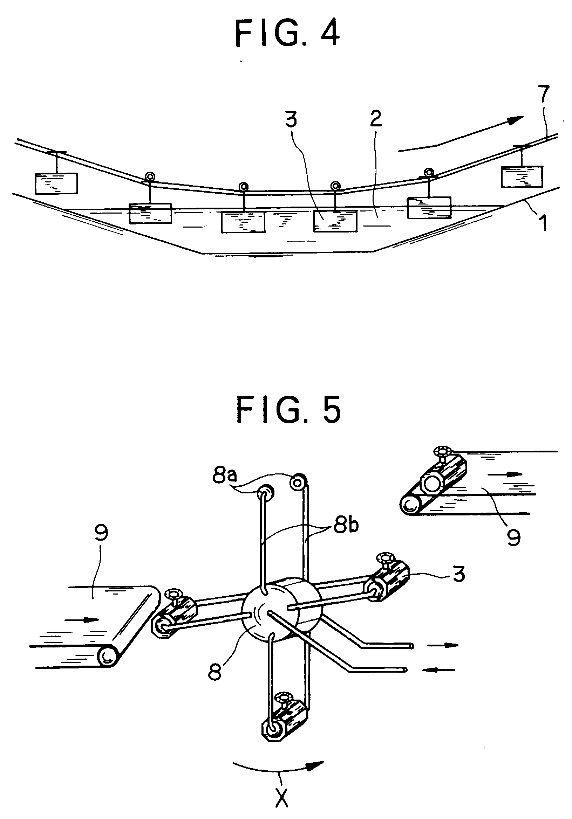

The continuous acid-washing treatment causes the valves 3 sequentially manufactured at the valve producing process 10 to be subjected as they emerge to the lead corroding step 15 without requiring them to be piled in units. Fig. 4 is a schematic process diagram illustrating the acid-washing step 13. The other component steps have basically the same construction as this acid-washing step 13.

With reference to this diagram, the valves 3 are conveyed as suspended from a valve retaining belt 7 which is being forwarded in the direction of an arrow mark, sequentially immersed in the detergent 2 held in the vessel 1, and left therein undergoing the acid washing for a prescribed duration. To be specific, the conveyance of the valves 3 is so adjusted that the interval between the time the lower side of a given valve is immersed in the detergent 2 and the time the valve is finally pulled out of the detergent 2 equals the duration of acid washing.

The concentration of the detergent 2 is strictly controlled by giving the vessel 1 an amply large inner volume or giving the detergent 2 a constant maintenance.

Fig. 5 illustrates another embodiment of this invention in the continuous acid-washing treatment. With reference to this diagram, when a given valve 3 which has been conveyed by a valve conveying belt 9 on the left-hand side is fitted at a fitting position to a pair of valve retaining members 8a, the liquid-contacting part which is the inner surface of the valve 3 is exclusively given the acid-washing treatment by the fact that the detergent 2 supplied from a hub 8 through a pipe 8b is allowed to flow through the fluid path of the valve 3 via the valve retaining members 8a.

The hub 8 is rotated at a prescribed angular speed in the direction of an arrow mark X. When it reaches a removing position, the valve 3 is removed from the valve retaining members 8a and conveyed by a valve conveying belt 9 disposed on the right-hand side to the subsequent step. The duration of one cycle between the time the valve is fitted to the valve retaining members 8a and the time it is removed therefrom is so adjusted as to equal the duration of acid washing. The angular speed of the hub 8 is regulated by this duration.

The valve retaining members 8a are made of fluorine rubber and the pipe 8b is lined with tetrafluoroethylene resin so as to be proofed against acids.

The embodiments of Figs. 4 and 5 are at an advantage in making it possible to promote the saving of floor space at the acid-washing step 13 and enable the acid-washing treatment to be selectively applied to the liquid-contacting part of the liquid flow path in the valve 3 and in decreasing the amount of waste effluent to the fullest possible extent as well. Further, the acid-washing treatment according to these embodiments possibly discolors the liquid-contacting part of the valve 3 and nevertheless avoids impairing the entire appearance thereof. It obviates the necessity of using an inhibitor which will be specifically described herein below and consequently permits a further decrease of the cost.

The embodiments described thus far permit such production conditions as production cost and quality control and such measures as fulfill external requirements such as those which concern the disposal of industrial waste to be suitably selected or combined through comprehensive consideration of all these factors.

Now, the operation of accelerating the dissolution of lead by means of the ultrasonic wave washing device 4 or by the action of bubbling will be described below.

The term "bubbling" means generating bubbles of carbon dioxide (CO₂) or oxygen (O₂) in the detergent 2. The bubbling contributes to the continuation of the effective concentration of the detergent 2 because the bubbles dissolve the lead from the surface of the valve 3 in the form of PbO and PbCO₃ besides Pb(NO₃)₂ and PbO₂ which are formed by the acid washing. The ultrasonic wave washing device 4 is effective in quickly removing from the surface of the valve 3 various lead compounds produced by the reactions occurring in the detergent 2 and is preferred to be utilized in conjunction with the action of bubbling.

Particularly by heightening the concentration of dissolved oxygen in the detergent 2, it is made possible for the oxygen to form compounds with the lead and facilitate dissolution of the lead. The atomization of the oxygen as by exposure to electromagnetic waves of a wavelength in the range of from the light of purple color through the light of far ultraviolet proves to be advantageous because it accelerates the effect mentioned above.

The valve 3 in the present embodiment is a gate valve of BC6 or a globe valve of BC6 when the material thereof is bronze, or a gate valve of C3771 or a globe valve of C3771 when the material is brass.

The detergent 2 which is obtained by mixing such an acid as nitric acid or acetic acid which is capable of corroding lead with tap water or purified water is used. Otherwise, the detergent 2 which is obtained by mixing nitric acid with hydrochloric acid manifesting the effect of an inhibitor and mixing the produced mixed acid with tap water or purified water is used. The latter detergent 2 corrodes the surface of the valve 3 without impairing the gloss of the surface because the C1⁻ ions of the hydrochloric acid corrode the surface of copper while forming a uniform film thereon. Meanwhile, the lead part of the copper alloy forms lead hydrochloride and lead nitrate. Since these salts are both soluble in the mixed acid, the corrosion in process is allowed to continue infallibly.

Now, the acid which is contained in the detergent 2 will be described below.

Generally, acids are known to corrode (oxidize) lead. The lead, on reacting with an acid, tends to form an oxide film and, consequently, does not easily succumb to continuous corrosion. Nitric acid, hydrochloric acid, and acetic acid as an organic acid continuously corrode lead. Among other acids mentioned above, the nitric acid (HNO₃) corrodes lead at the highest speed.

Meanwhile, the hydrochloric acid (HCl), though corroding lead at a lower speed than nitric acid, manifests a high compounding force with copper. When the mixture of hydrochloric acid with nitric acid is adopted as an acid wash, the acid wash forms a copper chloride (CuCl) film on the surface of the valve 3 before the nitric acid generates a chemical reaction with copper and forms copper oxide (Cu₂O or CuO) and consequently manifests the so-called inhibitor effect of repressing the corrosion of copper by nitric acid. The inclusion of hydrochloric acid in the acid wash, therefore, results in nulling the oxidation of copper on the surface of the valve 3, prevents the valve 3 from the disadvantage of being tarnished, and allows the valve 3 to retain the metallic gloss intact.

The test pieces which had been acid-washed with the mixture of nitric acid with hydrochloric acid were tested for lead content on the surface thereof. The results were as shown in Tables 1 and 2 below. Since this test used the method of fluorescent X-ray analysis, the concentration of lead (wt. %) was found in an area of about 0.1 mm in diameter to the largest depth of about 10 µm.

**Table 1**

| Lead Concentration (wt. %) of BC6 after being acid-washed with the mixed acid | | | | | |
|---|---|---|---|---|---|
| Concentration of Nitric Acid (%) | Concentration of Hydrochloric Acid (%) | Washing Time | | | |
| | | 5 min | 10 min | 30 min | 60 min |
| 0.5 | 0.05 | 2.73 | 1.45 | 0.90 | 0.78 |
| 1 | 0.1 | | | 0.89 | |
| 2 | 0.2 | | | 0.59 | |
| 3 | 0.3 | | | 0.41 | |
| 4 | 0.4 | 2.13 | 0.94 | 0.37 | 0.40 |
| 5 | 0.25 | 2.22 | 0.98 | 0.40 | 0.45 |
| | 0.5 | | | 0.58 | |
| | 1 | | | 1.22 | |
| | 2 | | | 1.20 | |
| 7 | 0.7 | | | 0.94 | |

**Table 2**

| Lead Concentration (wt. %) of C3771 after being acid-washed with the mixed acid | | | | | |
|---|---|---|---|---|---|
| Concentration of Nitric Acid (%) | Concentration of Hydrochloric Acid (%) | Washing Time | | | |
| | | 5 min | 10 min | 30 min | 60 min |
| 0.5 | 0.05 | 1.32 | 1.08 | 1.01 | 1.00 |
| 1 | 0.1 | | 1.09 | 1.09 | |
| 2 | 0.2 | 1.22 | 0.97 | 0.91 | 0.84 |
| 3 | 0.3 | | | 0.96 | |
| 4 | 0.4 | | | 1.00 | |
| 5 | 0.25 | 1.35 | 1.20 | 0.93 | 1.18 |
| | 0.5 | | | 1.17 | |
| | 1 | | | 1.25 | |
| | 2 | | | 1.33 | |
| 7 | 0.7 | | | 1.18 | |

This test has demonstrated the following facts. Many of the test pieces of both BC6 and C3771 used in the test runs adopting nitric acid concentrations of not less than 7 wt. % showed a discernible sign of discoloration. Since the degree of removal of lead was not appreciably exalted by increasing the nitric acid concentration beyond 7 wt. %, the nitric acid concentration is preferred to be less than 7 wt. % with consideration to the industrial conditions such as the cost of the detergent 2 and the property of quantity production.

When the nitric acid concentration is not more than 7 wt. %, the detergent 2 is allowed to repress discoloration and, on incorporating a small amount of hydrochloric acid additionally therein, enabled to manifest an inhibitor effect and effect the repression of discoloration to a greater extent. Some of the test pieces treated with detergents whose ratios of hydrochloric acid concentrations to nitric acid concentrations were lower than 5% showed a discernible sign of discoloration. The discoloration is ascribable to decreases in the inhibitor effect.

Since it has been established that the test pieces sustained a crack due to stress corrosion when the hydrochloric acid concentrations were unduly high, the proper range for the ratio of hydrochloric acid concentration to nitric acid concentration is between the lower limit of 5% and the upper limit which takes into due consideration the crack due to stress corrosion.

When such an acid as nitric acid which corrodes lead as described above is used by itself, it is allowable to use such a compound as benzotriazole (BTA) in place of hydrochloric acid as an inhibitor.

The benzotriazole is a chelating reagent for copper and silver which are particularly in a univalent state. It is used for repressing discoloration and corrosion of these metals.

When acetic acid is used for corroding lead, the detergent obviates the necessity of incorporating an inhibitor therein because acetic acid causes no chemical reaction with copper.

Now, working examples of the acid washing described above and results of relevant tests will be described below.

A valve 3 was degreased with such an organic solvent as alcohol. The degreased valve 3 was immersed in a detergent 2 illustrated in Fig. 2 and then subjected therein to the action of an ultrasonic wave washing device 4.

The detergents used in the present example had relevant chemical reagents incorporated in purified water in amounts expressed in wt. %. The kinds of detergent and those of material for the valve were as shown in Table 3 below.

**Table 3**

| Material | Detergent | | |
|---|---|---|---|
| BC6 | ① | ② | ③ |
| | Nitric acid (3 wt. %) | Nitric acid (4 wt. %) | Nitric acid (4 wt. %) |
| | | Benzotriazole (1 wt. %) | Hydrochloric acid (0.4 wt. %) |
| C3771 | ④ | ⑤ | ⑥ |
| | Nitric acid (1 wt. %) | Nitric acid (2 wt. %) | Nitric acid (2 wt. %) |
| | | Benzotriazole (1 wt. %) | Hydrochloric acid (0.2 wt. %) |

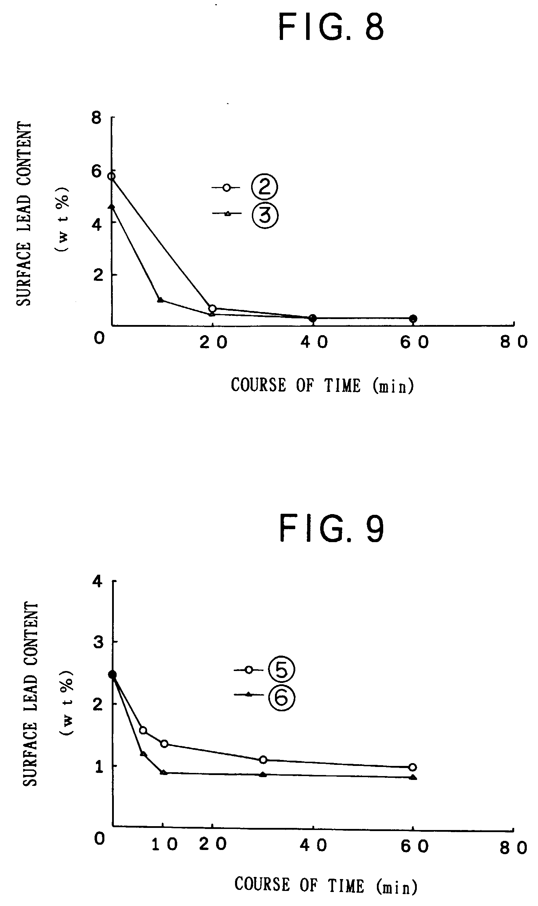

The graph of Fig. 8 shows that the removal of lead from the surface of BC6 by the acid washing in the case of ② (4 wt. % nitric acid + 1 wt. % benzotriazole) was found to be such that the surface lead content which was initially 5.9 wt. % was extremely decreased by 20 minutes' washing and thereafter was gradually decreased by 40 minutes' and 60 minutes' washing.

The removal of lead from the surface by the acid washing in the case of ③ (4 wt. % nitric acid + 0.4 wt. % hydrochloric acid) was found to be such that the surface lead content which was initially 4.6 wt. % was gradually decreased in the same trend as mentioned above. The difference in the initial surface lead content between the cases ② and ③ was due to the difference between the relevant test pieces of BC6. These surface lead contents were the magnitudes determined by the method of fluorescent X-ray analysis.

The graph of Fig. 9 shows that the removal of lead from the surface of C3771 by the acid washing in the case of ⑤ (2 wt. % nitric acid + 1 wt. % benzotriazole) was found to be such that the surface lead content which was initially 2.4 wt. % was extremely decreased by 10 minutes' washing and thereafter was gradually decreased by 30 minutes' and 60 minutes' washing.

The removal of lead from the surface by the acid washing in the case of ⑥ (2 wt. % nitric acid + 0.2 wt. % hydrochloric acid) was found to be such that the surface lead content which was initially 2.4 wt. % was gradually decreased in the same trend as mentioned above.

Incidentally, in the test pieces of C3771, the surface lead content was decreased after the acid washing only to 0.84 wt. % in the case of ⑥ as shown in the graph. This limited decrease of the surface lead content is logically explained by a supposition that since the test pieces of C3771 used in the present test had lead dispersed very finely (to below 10 µm) as compared with those of BC6, even after the lead present on the surface had been removed, the lead present at a greater depth failed to escape being detected by the method of fluorescent X-ray analysis which is capable of evaluating the amount of the lead present in a depth of about 10 µm.

The samples which had been washed by the method described above were tested for dissolution of lead in accordance with the AS (Australian) standard. The results were as follows.

First, a given valve 3 which had undergone the acid washing was extracted from the detergent and, with the opposed ends thereof stoppered with a stainless steel joint, immersed in distilled water, and washed three times therein by being shaken with a hand in preparation for the test.

Then, prior to the test of extraction, the valve 3 mentioned above was immersed similarly in distilled water as tightly sealed by having stainless steel joints fitted to the opposite terminal connecting parts thereof, left standing at rest therein for not less than 24 hours, subjected to this procedure up to four rounds, and then allowed to age for six days.

Thereafter, the valve was denuded of the stainless steel joints to discard the used distilled water from within, filled with fresh distilled water, tightly sealed again by having stainless steel joints fitted to the opposite terminal parts thereof, left standing at rest for not less than 24 hours, and then denuded of the joints. The distilled water consequently withdrawn from the valve was used as the sample for the analysis.

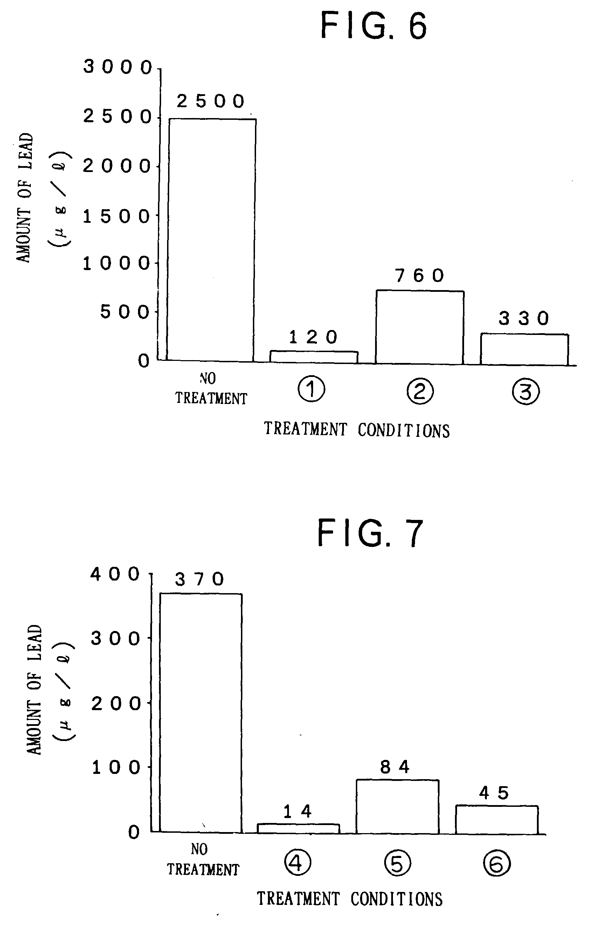

The analyses resulting from this test of extraction are shown in the graphs of Fig. 6 and Fig. 7 as the effect of acid washing on preventing lead dissolution. Fig. 6 depicts the analyses of valves of BC6 and Fig. 7 those of valves of C3771.

Fig. 6 shows that the amount of lead dissolved was 2500 µg/lit. in the absence of the acid-washing treatment contemplated by this invention, and 120 µg/lit. in the case of the detergent ①, 760 µg/lit. in the case of the detergent ② , and 330 µg/lit. in the case of the detergent ③ respectively indicated in Table 3.

The test pieces of BC6 failed to meet the standard of the AS specification (tolerable lead content in water for analysis: 50 µg/lit), though it was found to have a certain effect in the removal of surface lead. The reason for this failure is that the BC6 test pieces had a very large lead contents as compared with the C3771 test pieces. They can be expected to afford further removal of lead by setting the duration of acid washing at a greater length.

The elongation of the duration of the acid washing, however, entails the possibility that the removal of lead will not stop on the surface of the valve 3 but will reach a greater depth in the wall of the valve 3 and consequently lower the strength of the valve 3 itself and impair the function of the valve 3 to seal a fluid of high pressure. As concerns this problem, by having a crystal comminuting agent (boron, titanium, etc.) incorporated in a metallic material for the valve 3 during the course of production of the material and allowing the produced valve 3 to acquire a metallurgical texture having as fine metal crystals as C3771 and also having lead dispersed therein, for example, it is possible to attain an extreme decrease in the amount of lead suffered to be dissolved in the part of a deep layer.

Fig. 7 shows that the amount of lead dissolved was 370 µg/lit. in the absence of the acid-washing treatment and 14 µg/lit in the case of the detergent ④, 84 µg/lit. in the case of the detergent ⑤, and 45 µ/lit. in the case of the detergent ⑥ respectively indicated in Table 3.

Under these conditions of treatment, the test pieces conditioned with the detergents ④ and ⑥ were found to fulfill the standard of the AS specification mentioned above (tolerable lead content in water for analysis: 50 µg/lit).

When the detergents of Fig. 6 and Fig. 7 using nitric acid additionally incorporated hydrochloric acid therein as an inhibitor, they were found to be highly effective from the practical point of view as evinced by thorough elimination of the possibility of discoloring the surface of valve.

Moreover, since hydrochloric acid obviates the necessity of strictly controlling the washing conditions (concentration, duration of washing, temperature of detergent, etc.) as compared with BTA, it proves to be advantageous over BTA from the standpoint of the suitability for quantity production.

Thus, C3771 manifests an unusually satisfactory property with respect to the prevention of lead dissolution. Further in terms of the cost of production, it proves to be the most suitable material as evinced by the fact that even the valve of C3771 which has undergone the acid-washing treatment according to the present embodiment is less expensive than the valve of BC6 which has not undergone the treatment.

C3771, however, is at a disadvantage in succumbing to corrosion due to dezincification. The use of the copper-based alloy disclosed in U.S. Patent No. 5,507,885 (Assignee: KITZ CORPORATION) allows provision of a valve 3 which possesses the properties of resisting the adverse effects of deleading and dezincification. It is a copper-based alloy which excels in proofness against corrosion and in hot working property and has a composition of 59.0 to 62.0 wt. % of Cu, 0.5 to 4.5 wt.% of Pb, 0.05 to 0.25 wt.% of P, 0.5 to 2.0 wt.% of Sn, 0.05 to 0.10 wt.% of Ni, and the balance of Zn and unavoidable impurities. It is alternatively a copper-based alloy which excels in proofness against corrosion and in hot working property and has a composition consisting of 59.0 to 62.0 wt.% of Cu, 0.5 to 4.5 wt.% of Pb, 0.05 to 0.25 wt.% of P, 0.5 to 2.0 wt.% of Sn, 0.05 to 0.10 wt.% of Ni, 0.02 to 0.08 wt.% of Ti, and the balance of Zn and unavoidable impurities and having an α + β structure finely divided uniformly.

Further, the use of the copper-based alloy disclosed in JP Application 09-105,312 which has not yet been laid open to public inspection (Applicant: KITZ CORPORATION) allows provision of a valve 3 which possesses the property of hot working and the property to resist a crack due to stress corrosion besides the properties mentioned above. This copper-based alloy has a composition of 58.0 to 63.0 wt.% of Cu, 0.5 to 4.5 wt.% of Pb, 0.05 to 0.25 wt.% of P, 0.5 to 3.0 wt.% of Sn, 0.05 to 0.30 wt.% of Ni, and the balance of Zn and unavoidable impurities and excels in proofness against corrosion and in the property of hot working owing to the uniform comminution of an α + β structure. This alloy is enabled to exalt such mechanical properties as tensile strength, proof stress, and elongation by being subjected to proper extracting and drawing works and heat treatment and also enabled to acquire an outstanding quality of resisting a crack due to stress corrosion by being thoroughly relieved of internal stress. It is alternatively a copper-based alloy which has a composition of 58.0 to 63.0 wt.% of Cu, 0.5 to 4.5 wt.% of Pb, 0.05 to 0.25 wt.% of P, 0.5 to 3.0 wt.% of Sn, 0.05 to 0.30 wt.% of Ni, 0.02 to 0.15 wt.% of Ti, and the balance of Zn and unavoidable impurities and excels in proofness against corrosion and in the property of hot working owing to uniform comminution of an α + β structure. It is further a copper-based alloy which is characterized by enabling itself to exalt such mechanical properties as tensile strength, withstanding strength, and elongation by being subjected to proper extracting and drawing works and heat treatment and also acquire an outstanding quality of resisting a crack due to stress corrosion by being thoroughly relieved of internal stress. It is also a copper-based alloy which has P and Sn incorporated therein in such amounts as to have a mixing ratio, P (%) x 10 = (2.8 - 3.98) (%) - Sn (%).

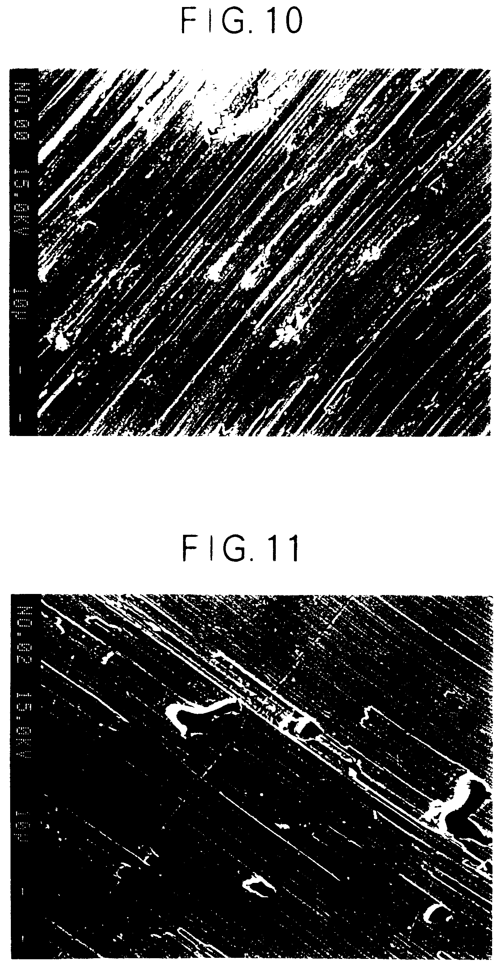

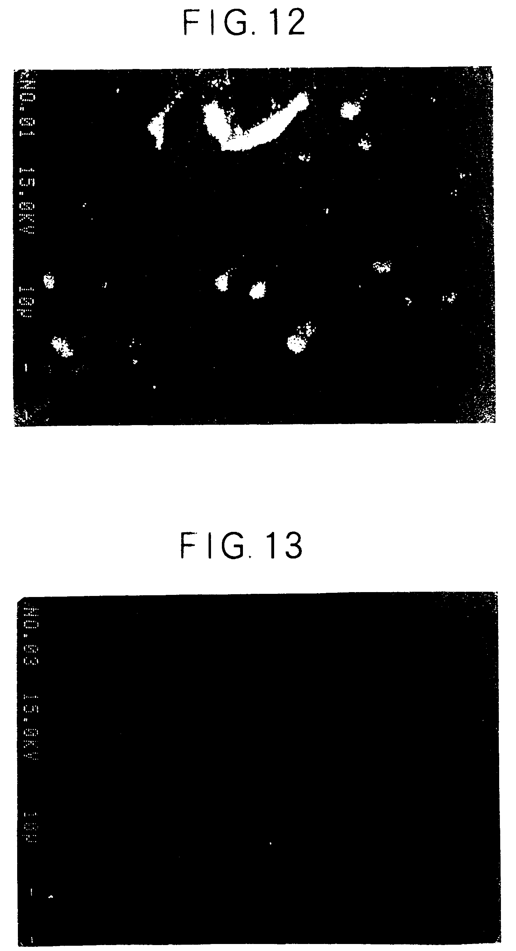

Fig. 10 to Fig. 13 are photographs comparing the plates of BC6, which is the same material as that of the valve, before and after the acid-washing treatment performed in accordance with the present invention.

Fig. 10 is a photomicrograph (x 1000) of the surface of the plate before the washing and Fig. 11 is a photomicrograph (x 1000) thereof after the washing. They clearly show that the lead on the surface of plate is corroded and consequently removed from the surface.

Though the embodiment, as depicted above, uses valves which are made of BC6 and C3771, this invention does not need to be limited to these valves but may be widely applied to the piping devices which are made of such lead-containing copper alloys as bronze and brass and other metals.

The detergents illustrated above have been confirmed to be capable of preventing metals from dissolving lead and preventing metals from undergoing discoloration owing to the combination of nitric acid with other simple acids or mixed acids or the combination of an acid with a reaction repressing agent as an inhibitor.

As is clear from the description given above, the present invention allows a marked decrease in the amount of lead to be dissolved from such piping devices as metallic valves, pipes and joints and effects this decrease of the amount of dissolution of lead without inducing discoloration of the surface of metal.

## Claims

1. A method for preventing contamination by lead from a piping device (3) made of a lead-containing copper alloy, characterised by the step (13) of chemically conditioning with an acid-containing detergent (2) at least part of the piping device coming into contact with a liquid , thereby inducing corrosion of lead dissolved out onto a surface layer of the liquid-contacting part of the piping device to delead the surface layer of the liquid-contacting part.

2. The method according to claim 1, characterised in that the chemical conditioning step (13) is effected by immersing the piping device (3) in the acid-containing detergent (2), and which further comprises the step of subjecting the piping device to ultrasonic washing while being immersed in the acid-containing detergent, thereby accelerating the corrosion of the lead.

3. The method according to claim 1 or claim 2, characterised in that the detergent contains one of nitric acid and acetic acid, or a mixture thereof.

4. The method according to claim 1 or claim 2, characterised in that the detergent comprises nitric acid and an inhibitor added thereto.

5. The method according to claim 4, characterised in that the inhibitor is hydrochloric acid or benzotriazole.
